(19) Europäisches Patentamt
European Patent Office
Office européen des brevets

(11) **EP 2 296 062 B1**

(12) **EUROPÄISCHE PATENTSCHRIFT**

(45) Veröffentlichungstag und Bekanntmachung des Hinweises auf die Patenterteilung:
**23.06.2021 Patentblatt 2021/25**

(51) Int Cl.:
*G05B 13/02* *(2006.01)*

(21) Anmeldenummer: **10171180.2**

(22) Anmeldetag: **29.07.2010**

(54) **Verfahren zum rechnergestützten Lernen einer Steuerung und/oder Regelung eines technischen Systems**

Method for computer-supported learning of a control and/or regulation of a technical system

Procédé d'apprentissage assisté par ordinateur d'une commande et/ou d'un réglage d'un système technique

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **09.09.2009 DE 102009040770**

(43) Veröffentlichungstag der Anmeldung:
**16.03.2011 Patentblatt 2011/11**

(73) Patentinhaber: **Siemens Aktiengesellschaft 80333 München (DE)**

(72) Erfinder:
• **Hans, Alexander**
**80639 München (DE)**
• **Udluft, Steffen Dr.**
**82223 Eichenau (DE)**

(56) Entgegenhaltungen:
**EP-A1- 1 058 169    WO-A1-2008/080864**

• **WANG D ET AL: "Multi-model based real-time final product quality control strategy for batch processes", COMPUTERS & CHEMICAL ENGINEERING, PERGAMON PRESS, OXFORD, GB, Bd. 33, Nr. 5, 21. Mai 2009 (2009-05-21), Seiten 992-1003, XP026034192, ISSN: 0098-1354, DOI: DOI:10.1016/J.COMPCHEMENG.2008.10.022 [gefunden am 2008-11-13]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum rechnergestützten Lernen einer Steuerung und/oder Regelung eines technischen Systems sowie ein entsprechendes Verfahren zum Betrieb eines technischen Systems und ein Computerprogrammprodukt.

Aus dem Stand der Technik sind verschiedene Verfahren bekannt, mit denen basierend auf vorab ermittelten Trainingsdaten, welche den Betrieb eines technischen Systems repräsentieren, ein Optimalbetrieb dieses Systems modelliert werden kann. Das technische System wird dabei durch Zustände, Aktionen und Folgezustände beschrieben, wobei die Zustände bestimmte technische Parameter bzw. beobachteten Zustandsgrößen des technischen Systems sind, und die Aktionen entsprechende Stellgrößen repräsentieren, welche am technischen System variiert werden können. Aus dem Stand der Technik sind allgemein bestärkende Lernverfahren (englisch: Reinforcement Learning) bekannt, welche für ein technisches System basierend auf Trainingsdaten eine optimale Aktionsauswahlregel gemäß einem Optimalitätskriterium lernen. Die bekannten Verfahren haben den Nachteil, dass sie keine Aussagen im Hinblick auf die statistische Unsicherheit einer gelernten Aktionsauswahlregel liefern. Solche Unsicherheiten sind insbesondere bei einer kleinen Menge an Trainingsdaten sehr groß.

In der Druckschrift [1] wird ein Verfahren beschrieben, welches die statistische Unsicherheit einer zum Lernen der Aktionsauswahlregel verwendeten Qualitätsfunktion berücksichtigt. Dabei wird ein Lernverfahren zur Bestimmung einer Aktionsauswahlregel mit einer statistischen Unsicherheit kombiniert, wobei basierend auf an sich bekannter Unsicherheitspropagation (englisch: Uncertainty Propagation), welche auch als Gaußsche Fehlerfortpflanzung bezeichnet wird, ein Maß für die statistische Unsicherheit einer beim Lernen berücksichtigten Qualitätsfunktion ermittelt wird. Bei der Unsicherheitspropagation werden dabei Korrelationen zwischen Unsicherheiten der im Lernverfahren einfließenden Variablen mittels einer Kovarianzmatrix berücksichtigt. Auf diese Weise wird die Unsicherheit in den Variablen exakt propagiert und berechnet, was zu einem sehr hohen Rechenaufwand und Speicherplatzbedarf beim rechnergestützten Lernen einer entsprechenden Steuerung eines technischen Systems führt.

Die Druckschrift WO 2008/080864 A1 offenbart ein rechnergestütztes Verfahren, mit dem eine Aktionsauswahlregel zur Regelung bzw. Steuerung eines technischen System basierend auf einem rekurrenten neuronalen Netz in Kombination mit einem Feed-Forward-Netz gelernt wird.

In der Druckschrift Wang D et al: "Multi-model based realtime final product quality control strategy for batch processes", COMPUTER & CHEMICAL ENGINEERING, PERGAMON PRESS, OXFORD, GB, Bd. 33, Nr. 5, 21. Mai 2009 (2009-05-21), Seiten 992-1003, wird eine Steuerung für ein Verfahren zur Herstellung von Produkten beschrieben, wobei ihm Rahmen der Produktherstellung Prozessparameter zur Erreichung einer optimalen Produktqualität basierend auf einem Optimierungsverfahren angepasst werden.

Aufgabe der Erfindung ist es, ein Verfahren zum Lernen der Steuerung und/oder Regelung eines technischen Systems zu schaffen, welches die statistische Unsicherheit der beim Lernen verwendeten Trainingsdaten berücksichtigt und dabei gleichzeitig effizient im Hinblick auf Speicherplatzbedarf und Rechenzeit ist.

Diese Aufgabe wird durch die unabhängigen Patentansprüche gelöst. Weiterbildungen der Erfindung sind in den abhängigen Ansprüchen definiert.

In dem erfindungsgemäßen Verfahren wird rechnergestützt eine Steuerung bzw. Regelung eines technischen Systems gelernt, wobei der Betrieb des technischen Systems charakterisiert ist durch Zustände, welche das technische System im Betrieb einnehmen kann, und Aktionen, welche während des Betriebs des technischen Systems ausgeführt werden und einen jeweiligen Zustand des technischen Systems in einen Folgezustand überführen. In dem erfindungsgemäßen Verfahren werden basierend auf im Betrieb des technischen Systems erfassten Trainingsdaten umfassend Zustände, Aktionen und Folgezustände eine Qualitätsfunktion und eine Aktionsauswahlregel gelernt, wobei das Lernen insbesondere mit einem bestärkenden Lernverfahren erfolgt. Die Qualitätsfunktion modelliert dabei einen Optimalbetrieb des technischen Systems im Hinblick auf für das technische System spezifische Kriterien und die Aktionsauswahlregel gibt im Betrieb des technischen Systems für einen jeweiligen Zustand des technischen Systems die bevorzugt auszuführende Aktion oder auszuführenden Aktionen an.

In dem erfindungsgemäßen Verfahren wird während des Lernens der Qualitätsfunktion und der Aktionsauswahlregel ein Maß für die statistische Unsicherheit der Qualitätsfunktion mittels einer Unsicherheitspropagation ermittelt und in Abhängigkeit von dem Maß für die statistische Unsicherheit und einem Sicherheitsparameter, der einer statistischen Mindestanforderung an die Qualitätsfunktion entspricht, wird eine modifizierte Qualitätsfunktion bestimmt. Unter einem Maß für die statistische Unsicherheit wird insbesondere ein Maß für die statistische Varianz bzw. Standardabweichung verstanden, vorzugsweise die statistische Varianz bzw. Standardabweichung selbst. Basierend auf der daraus bestimmten modifizierten Qualitätsfunktion wird die Aktionsauswahlregel gelernt.

Im Unterschied zu dem Verfahren der Druckschrift [1] zeichnet sich das erfindungsgemäße Verfahren dadurch aus, dass die Unsicherheitspropagation eine Kovarianzmatrix verwendet, in der die Nicht-Diagonalelemente vernachlässigt sind, d.h. die Nicht-Diagonalelemente werden auf Null gesetzt. Dies ist gleichbedeutend damit, dass Korrelationen zwischen den bei der Unsicherheitspropagation berücksichtigten Variablen vernachlässigt werden. Die Unsicherheit wird somit nicht mehr exakt propagiert und berechnet, sondern es wird lediglich eine Approximation durchgeführt. Trotz dieser Näherung liefert das erfindungsgemäße Verfahren immer noch gute Resultate in der Form einer sicherheitsoptimalen Aktionsauswahlregel, welche die Performanz des technischen Systems unter Berücksichtigung der statistischen Unsicherheit maximiert. Das Verfahren hat gegenüber dem Verfahren der Druckschrift [1] den wesentlichen Vorteil, dass die Rechenzeit und der benötigte Arbeitsspeicher wesentlich geringer sind, denn es müssen nur noch die Diagonalelemente der Kovarianzmatrix ermittelt werden. Insbesondere liegen Rechenzeit und Arbeitsspeicherbedarf in derselben Größenordnung wie herkömmliche bestärkende Lernverfahren, die keine statistische Unsicherheit berücksichtigen.

Das Lernen der Qualitätsfunktion und der Aktionsauswahlregel erfolgt in einer bevorzugten Variante des erfindungsgemäßen Verfahrens unter Berücksichtigung von Bewertungen und Zustands-Aktions-Wahrscheinlichkeiten. Eine jeweilige Bewertung bewertet dabei die Qualität einer Kombination aus Zustand, in dem Zustand ausgeführter Aktion und Folgezustand im Hinblick auf den Optimalbetrieb des technischen Systems und wird oftmals auch als Reward bezeichnet. Eine Zustands-Aktions-Wahrscheinlichkeit gibt in Abhängigkeit von einem Zustand und der in dem Zustand ausgeführten Aktion die Wahrscheinlichkeit eines Folgezustands an. Werden Bewertungen beim Lernen berücksichtigt, sind solche Bewertungen in den Trainingsdaten enthalten bzw. es existiert eine Funktion, welche in Abhängigkeit von Zustand, Aktion und Folgezustand eine entsprechende Bewertung ausgibt.

In einer besonders bevorzugten Ausführungsform werden die Qualitätsfunktion und die Aktionsauswahlregel basierend auf der an sich bekannten Bellman-Iteration gelernt. Dabei wird in jedem Iterationsschritt eine neue Qualitätsfunktion und ein neues Maß für die statistische Unsicherheit der Qualitätsfunktion und hierdurch eine neue modifizierte Qualitätsfunktion bestimmt, wobei in einem jeweiligen Iterationsschritt zur Bestimmung des neuen Maßes für die statistische Unsicherheit die Kovarianzmatrix in Abhängigkeit von der Qualitätsfunktion, den Zustands-Aktions-Wahrscheinlichkeiten und den Bewertungen unter Vernachlässigung der Nicht-Diagonalelemente ermittelt wird. Es fließen somit nur Varianzen in die Unsicherheitspropagation ein. Das heißt, die Kovarianzmatrix ist dahingehend approximiert, dass Korrelationen zwischen der statistischen Unsicherheit der Qualitätsfunktion, der statistische Unsicherheit der Bewertungen und der statistischen Unsicherheit der Zustands-Aktions-Wahrscheinlichkeiten vernachlässigt werden.

In einer besonders bevorzugten Ausführungsform wird im m-ten Iterationsschritt der Bellman-Iteration die Aktionsauswahlregel basierend auf folgender Aktion $a_{s,\max}$ bestimmt:

$$\forall s : a_{s,\max} = \arg\max_{a}[Q^m(s,a) - \xi\sigma Q^m(s,a)]$$

wobei

$$Q^m(s,a) = \sum_{s'} P(s'|s,a)[R(s,a,s') + \gamma V^{m-1}(s')]$$

die Qualitätsfunktion und $Q^m(s,a) - \xi\sigma Q^m(s,a)$ die modifizierte Qualitätsfunktion ist;

$\sigma Q^m(s,a)$ das Maß $(\sigma Q)$ für die statistische Unsicherheit der Qualitätsfunktion $(Q)$ im m-ten Iterationsschritt ist, wobei

$$\left(\sigma Q^m(s,a)\right)^2 = \sum_{s'} \left(D_{QQ}\right)^2 \left(\sigma V^{m-1}(s')\right)^2 +$$
$$\sum_{s'} \left(D_{QP}\right)^2 \left(\sigma P(s'|s,a)\right)^2 +$$
$$\sum_{s'} \left(D_{QR}\right)^2 \left(\sigma R(s,a,s')\right)^2,$$

$$\left(D_{QQ}\right) = \gamma P(s'|s,a),$$

$$\left(D_{QP}\right) = R(s,a,s') + \gamma V^{m-1}(s'),$$

$$\left(D_{QR}\right) = P(s'|s,a)$$

$\gamma \in [0,1]$ ein Diskontierungsfaktor ist;

$\xi$, der Sicherheitsparameter ist;

$$V^m(s) = \max_a[Q^m(s,a) - \xi\sigma Q^m(s,a)] \; ;$$

$$(\sigma V^m(s))^2 = (\sigma Q(s,a_{s,\max}))^2 \;\; \texttt{gilt;}$$

P(s'|s,a) die Zustands-Aktions-Wahrscheinlichkeit für den Folgezustand s' bei Ausführung der Aktion a im Zustand s ist;

R(s,a,s') die Bewertung des Folgezustands s' bei Ausführung der Aktion a im Zustand s ist;

$\sigma$P(s'|s,a) die statistische Unsicherheit der Zustands-Aktions-Wahrscheinlichkeiten ist;

$\sigma$R(s,a,s') die statistische Unsicherheit der Bewertungen ist.

In einer weiteren, besonders bevorzugten Ausführungsform des erfindungsgemäßen Verfahrens werden die Zustands-Aktions-Wahrscheinlichkeiten als eine Zustands-Aktions-Wahrscheinlichkeitsverteilung modelliert und/oder die Bewertungen werden als eine Bewertungs-Wahrscheinlichkeitsverteilung modelliert. Die Zustands-Aktions-Wahrscheinlichkeitsverteilung bzw. die Bewertungs-Wahrscheinlichkeitsverteilung wird in dem oben genannten Verfahren, bei dem die statistischen Unsicherheiten der Zustands-Aktions-Wahrscheinlichkeiten bzw. Bewertungen einfließen, vorzugsweise dazu verwendet, um diese statistischen Unsicherheiten zu bestimmen.

In einer weiteren Variante des erfindungsgemäßen Verfahrens werden die Zustands-Aktions-Wahrscheinlichkeitsverteilung und/oder die Bewertungs-Wahrscheinlichkeitsverteilung als relative Häufigkeiten aus den Trainingsdaten modelliert, wobei die Zustands-Aktions-Wahrscheinlichkeitsverteilung insbesondere als Multinomial-Verteilung modelliert wird und/oder die Bewertungs-Wahrscheinlichkeitsverteilung insbesondere als Normalverteilung modelliert wird.

In einer weiteren, besonders bevorzugten Ausführungsform des erfindungsgemäßen Verfahrens wird die Zustands-Aktions-Wahrscheinlichkeitsverteilung basierend auf einer Bayesianischen Schätzung mit einer A-priori-Verteilung und A-posteriori-Parameter modelliert, wobei die A-posteriori-Parameter von den Trainingsdaten abhängen. Diese Bayesianische Modellierung hat den Vorteil, dass die Unsicherheiten der Schätzer besser zugänglich sind. Vorzugsweise wird dabei als A-priori-Verteilung eine Dirichlet-Verteilung bzw. gegebenenfalls auch eine Normalverteilung verwendet. In einer besonders bevorzugten Variante werden bei der Verwendung der Dirichlet-Verteilung deren Parameter derart gewählt, dass jeder Parameter dem Quotienten aus der durchschnittlichen Anzahl an Folgezuständen und der Gesamtanzahl aus Zuständen gemäß den Trainingsdaten entspricht. Auf diese Weise wird insbesondere auch für den Fall von wenigen Beobachtungen eine realistische Aktionsauswahlregel gelernt.

Die im erfindungsgemäßen Verfahren gelernte Aktionsauswahlregel kann sowohl deterministisch als auch stochastisch sein. Eine deterministische Aktionsauswahlregel gibt dabei für einen Zustand des technischen Systems eine feste Aktion an. Demgegenüber gibt eine stochastische Aktionsauswahlregel für einen Zustand des technischen Systems eine Wahrscheinlichkeitsverteilung für die ausführbaren Aktionen an. Wird eine deterministische Aktionsauswahlregel $\pi$ verwendet, so lautet die Aktionsauswahlregel $\pi^m(s)$ im m-ten Iterationsschritt der oben beschriebenen Bellman-Iteration vorzugsweise wie folgt:

$$\pi^m(s) = \arg\max_a Q^m(s,a) - \xi\sigma Q^m(s,a) \, ,$$

wobei $\pi^m(s)$ die ausgewählte Aktion ist.

In einer weiteren, besonders bevorzugten Ausführungsform ist die stochastische Aktionsauswahlregel derart ausgestaltet, dass in jedem Iterationsschritt der oben beschriebenen Bellman-Iteration als neue Wahrscheinlichkeitsverteilung für die ausführbaren Aktionen eine Wahrscheinlichkeitsverteilung ermittelt wird, welche die Wahrscheinlichkeitsverteilung des letzten Iterationsschritts derart modifiziert, dass der Aktion, welche den Wert der modifizierten Qualitätsfunktion maximiert, eine höhere Wahrscheinlichkeit zugewiesen wird.

Das erfindungsgemäße Verfahren kann für beliebige technische Systeme eingesetzt werden. In einer besonders bevorzugten Variante wird das Verfahren zum Lernen einer Steuerung bzw. Regelung einer Turbine, insbesondere einer Gasturbine, verwendet. Die Zustände der Gasturbine sind dabei beispielsweise die Menge an zugeführtem Treibstoff und/oder das Brummen der Turbine. Aktionen sind dabei z.B. die Veränderung der zugeführten Treibstoffmenge bzw.

eine Veränderung an den Einstellungen der Schaufeln der Turbine.

In einer weiteren Variante des erfindungsgemäßen Verfahrens wird die Steuerung und/oder Regelung einer Windkraftanlage gelernt. Dabei können die Zustände der Windkraftanlage beispielsweise die Windstärke, die Rotorgeschwindigkeit, die Abnutzung von Komponenten der Anlage und dergleichen sein. Aktionen können in diesem Zusammenhang beispielsweise die Verstellung des Einstellwinkels der einzelnen Rotorblätter der Windkraftanlage sein.

Neben dem oben beschriebenen Lernverfahren umfasst die Erfindung ferner ein Verfahren zum Betrieb eines technischen Systems, wobei das technische System basierend auf einer Steuerung bzw. Regelung betrieben wird, welche mit einer beliebigen Variante des oben beschriebenen Lernverfahrens gelernt wurde. Dabei wird mit der gelernten Aktionsauswahlregel in einem jeweiligen Zustand des technischen Systems die auszuführende Aktion ausgewählt. Bei einer stochastischen Aktionsauswahlregel erfolgt dies z.B. durch zufällige Auswahl der Aktionen gemäß der jeweiligen Wahrscheinlichkeit. In einer bevorzugten Variante dieses Betriebs wird das obige Lernverfahren dabei in Abständen wiederholt, wobei bei jeder Wiederholung die neu vom technischen System eingenommenen Zustände und durchgeführten Aktionen als Trainingsdaten berücksichtigt werden.

Neben dem oben beschriebenen Verfahren betrifft die Erfindung ferner ein Computerprogrammprodukt mit einem auf einem maschinenlesbaren Träger gespeicherten Programmcode zur Durchführung der erfindungsgemäßen Verfahren, wenn das Programm auf einem Rechner abläuft.

Ausführungsbeispiele der Erfindung werden nachfolgend anhand der beigefügten Figuren detailliert beschrieben.

Es zeigen:

Fig. 1 ein Diagramm, welches die gemäß Ausführungsformen der Erfindung erhaltenen Belohnungen mit den entsprechenden Belohnungen gemäß dem Verfahren der Druckschrift [1] vergleicht; und

Fig. 2 ein Diagramm, welches die mit Ausführungsformen des erfindungsgemäßen Verfahrens erhaltenen Belohnungen mit Belohnungen vergleicht, welche mit einem Verfahren erhalten werden, das keine statistische Unsicherheit der Qualitätsfunktion berücksichtigt.

Nachfolgend wird die Erfindung an dem Beispiel eines technischen Systems erläutert, welches durch einen Zustandsraum S und einen Aktionsraum A charakterisiert ist. Der Zustandsraum stellt eine Vielzahl von diskreten bzw. kontinuierlichen Zuständen in der Form von Parametern des technischen Systems dar, welche das technische System während seines Betriebs charakterisieren. Bei einer Gasturbine können diese Parameter beispielsweise die Menge an zugeführtem Treibstoff oder das Brummen der Turbine sein. Der Aktionsraum bezeichnet die möglichen, am technischen System durchführbaren Aktionen, wobei mit den Aktionen die Zustände des technischen Systems verändert werden können. Eine Aktion kann die Veränderung einer Stellgröße des technischen Systems sein, beispielsweise eine Veränderung der Position von Leitschaufeln einer Gasturbine, eine Veränderung der Treibstoffzufuhr und dergleichen.

Die Dynamik des technischen Systems wird in der hier beschriebenen Ausführungsform als Markov-Entscheidungs-Prozess durch eine Transitions-Wahrscheinlichkeitsverteilung $P_T : S \times A \times S \rightarrow [0,1]$ charakterisiert, welche vom aktuellen Zustand des technischen Systems, der im aktuellen Zustand durchgeführten Aktion sowie des daraus resultierenden Folgezustands des technischen Systems abhängt. In der hier beschriebenen Ausführungsform des erfindungsgemäßen Verfahrens wird rechnergestützt basierend auf Trainingsdaten eine Aktionsauswahlregel gelernt, wobei eine Aktionsauswahlregel im Allgemeinen angibt, welche Aktion in einem vorgegebenen Zustand des technischen Systems bevorzugt auszuführen ist. Die Aktionsauswahlregel kann hierbei deterministisch sein, d.h. es wird eine bestimmte Aktion durch die Regel festgelegt, sie kann jedoch auch stochastisch sein, d.h. die Aktionsauswahlregel gibt eine Wahrscheinlichkeitsverteilung der durchzuführenden Aktionen ausgehend von einem Zustand an. Ziel des erfindungsgemäßen Verfahrens ist das Lernen einer sog. sicherheitsoptimalen Aktionsauswahlregel, welche nicht notwendigerweise im Hinblick auf die erwartete Performanz optimal ist, sondern einer statistischen Mindestanforderung an die Aktionsauswahlregel genügt. Auf diese Weise können Aktionsauswahlregeln gelernt werden, welche zwar nicht das Optimalitätskriterium der maximalen erwarteten Performanz erfüllen, jedoch eine garantierte Performanz maximieren.

Die hier beschriebene Variante der Erfindung baut dabei auf das Verfahren gemäß der Druckschrift [1] auf, wobei das erfindungsgemäße Verfahren jedoch wesentlich recheneffizienter ist, da Korrelationen zwischen Unsicherheiten von die Aktionsauswahlregel bestimmenden Variablen vernachlässigt werden, wie weiter unten noch näher beschrieben wird.

Zunächst wird nachfolgend ein bestärkendes Lernverfahren gemäß dem Stand der Technik erläutert, bei dem die Aktionsauswahlregel basierend auf dem entsprechenden Optimalitätskriterium gelernt wird. Das Optimalitätskriterium wird dabei durch eine entsprechende Bewertung R repräsentiert, wobei die Bewertung für einen Zustand, die in diesem Zustand durchgeführte Aktion a und den Folgezustand s' angibt, wie erstrebenswert die durchgeführte Aktion a im Hinblick auf den Optimalbetrieb des technischen Systems ist. Der Optimalbetrieb kann in Abhängigkeit von dem betrachteten technischen System beliebig festgelegt sein, beispielsweise sind Kriterien für einen solchen Betrieb, dass keine Zustände auftreten, die zu einer Beschädigung bzw. Zerstörung des technischen Systems führen, bzw. dass ein optimaler Wirkungsgrad im Betrieb des technischen Systems erreicht wird. Bei einer Gasturbine könnte der Optimalbetrieb beispielsweise dadurch spezifiziert sein, dass ein hoher Wirkungsgrad erreicht wird, ohne dass ein Brummen der Turbine auftritt.

Gemäß dem bestärkenden Lernen wird nach einer Aktionsauswahlregel $\pi: S \rightarrow A$ gesucht, welche unter der Annahme eines Markov-Entscheidungs-Prozesses $M := (S,A,P_T,R)$ mit dem Zustandsraum S, dem Aktionsraum A sowie der Wahrscheinlichkeitsverteilung $P_T: S \times A \times S \rightarrow [0,1]$ zu einem optimalen Betrieb des technischen Systems führt. Dabei wird jeder Zustand, die in diesem Zustand ausgeführte Aktion und der daraus resultierende Folgezustand mit der Belohnungsfunktion $R : S \times A \times S \rightarrow \Re$ bewertet. Der Optimalbetrieb wird dabei durch das Maximum der sog. Value-Funktion beschrieben, welche wie folgt lautet:

$$V^{\pi}(s) = \sum_{s'} P(s'|s,a)\left[R(s,a,s') + \gamma V^{\pi}(s')\right]$$

Diese Value-Funktion ist die erwartete diskontierte Summe von zukünftigen Bewertungen, wobei $\gamma \in [0,1]$ der Diskontierungsfaktor ist. Dabei wird in der Regel die sog. Q-Funktion $Q^{\pi}(s,a)$ verwendet, welche die erwartete diskontierte Belohnung nach der Wahl der Aktion a im Zustand s und dem darauffolgenden Befolgen der Aktionsauswahlregel $\pi$ repräsentiert. Die Q-Funktion für die optimale Aktionsauswahlregel $Q^{\pi^*} = Q^*$ ist dabei durch eine Lösung der sog. Bellman-Optimalitäts-Gleichung gegeben, welche wie folgt lautet:

$$Q^*(s,a) = E_{s'}\left[R(s,a,s') + \gamma V^*(s')\right] = E_{s'}\left[R(s,a,s') + \gamma \max_{a'} Q^*(s',a')\right]$$

$E_{s'}$ ist dabei der Erwartungswert. Ausgehend von $Q^*$ gilt für die optimale Aktionsauswahlregel $\pi^*(s) = \text{argmax}_a Q^*(s,a)$, wobei $\pi^*$ eine deterministische Aktionsauswahlregel darstellt. Wie bereits oben erwähnt, kann die Aktionsauswahlregel jedoch auch als stochastische Aktionsauswahlregel $\pi(a|s)$ ausgestaltet sein, welche die Wahrscheinlichkeit für die Wahl der Aktion a im Zustand s liefert.

Die obige Bellman-Optimalitäts-Gleichung wird durch die hinlänglich aus dem Stand der Technik bekannte Bellman-Iteration gelöst, welche weiter unten noch näher erläutert wird. Im Folgenden wird T als der Bellman-Operator definiert, der für jede beliebige Qualitätsfunktion Q wie folgt lautet:

$$(TQ)(s,a) = E_{s'}\left(R(s,a,s') + \gamma \max_{a'} Q(s',a')\right)$$

In der nachfolgend beschriebenen Ausführungsform der Erfindung wird zusätzlich die statistische Unsicherheit betrachtet, welche sich aus den Unsicherheiten der Messungen im technischen System ergibt, welche als Trainingsdaten zur Bestimmung einer Aktionsauswahlregel für das technische System verwendet werden.

Diese statistischen Unsicherheiten führen zu einer Unsicherheit der betrachteten Q-Funktion und somit der gelernten Aktionsauswahlregel. Die beim bestärkenden Lernen vorhandene Unsicherheit resultiert aus dem Nichtwissen über das wahre Verhalten des technischen Systems, d.h. dem wahren Markov-Entscheidungs-Prozess, der dem technischen System zu Grunde liegt. Je mehr Beobachtungen in Form von Trainingsdaten über das technische System vorliegen, desto mehr Informationen hat man über den Markov-Entscheidungs-Prozess. Je größer die Stochastizität ist, desto mehr Unsicherheit verbleibt in Bezug auf den Markov-Entscheidungs-Prozess für eine vorgegebene Anzahl an Beobachtungen.

Die Unsicherheit der Messungen basierend auf den Trainingsdaten, d.h. die Unsicherheit der Transitionen von einem Zustand auf den nächsten unter Anwendung einer Aktion und der damit verbundenen Bewertung, wird in der nachfolgend beschriebenen Variante der Erfindung in die Q-Funktion propagiert, und zwar durch Unsicherheitspropagation. Das Prinzip der Unsicherheitspropagation, auch als Gaußsche Propagation von Unsicherheiten bzw. Gaußsche Fehlerfortpflanzung bezeichnet, ist hinlänglich aus dem Stand der Technik bekannt und beruht auf einer Taylor-Entwicklung ersten Grades um den jeweiligen geschätzten Punkt. Gemäß dem in der Druckschrift [1] beschriebenen Verfahren wird die Unsicherheit der Funktionswerte $f(x)$ mit $f : \Re^m \rightarrow \Re^n$ bei vorgegebener Unsicherheit der Argumente x basierend auf folgender Kovarianz berechnet:

$$Cov(f) = Cov(f, f) = D Cov(x) D^T$$

$$D_{i,j} = \frac{\partial f_i}{\partial x_j}$$

Dabei bedeutet die Jacobi-Matrix von f nach ihren Argumenten x. Mit $Cov(x) = Cov(x,x)$ wird die Kovarianz der Argumente x bezeichnet, die wiederum von der Unsicherheit von x abhängt. Die Funktion f verfügt dann über die symmetrische und positiv definite Kovarianz und Unsicherheit $Cov(f)$. Das Verfahren der Druckschrift [1] hat dabei den Nachteil, dass die vollständige Kovarianzmatrix berechnet wird, welche im m-ten Bellman-Iterationsschritt von der Q-Funktion $Q^m$ in diesem Iterationsschritt, der Transitions-Wahrscheinlichkeit P und der Bewertung R abhängt. Diese vollständige Berechnung der Kovarianzmatrix in jedem Iterationsschritt ist aufwändig und führt zu einer sehr hohen Rechenzeit.

Erfindungsgemäß wurde erkannt, dass das Verfahren der Druckschrift [1] wesentlich recheneffizienter ausgestaltet werden kann, indem die Nicht-Diagonalelemente der Kovarianzmatrix vernachlässigt werden, d.h. auf Null gesetzt werden. Dies entspricht der Annahme, dass Korrelationen zwischen den Unsicherheiten der die Kovarianzmatrix bestimmenden Variablen, d.h. Korrelationen zwischen der Q-Funktion $Q^m$, der Transitions-Wahrscheinlichkeit P und der Bewertung R, vernachlässigbar sind. Trotz dieser Approximation können hierdurch immer noch sehr gute Aktionsauswahlregeln gelernt werden, wie die Erfinder anhand von Experimenten nachweisen konnten. Der Vorteil des erfindungsgemäßen Verfahrens besteht dabei darin, dass seine Rechenzeit um ein Vielfaches geringer ist als in dem Verfahren der Druckschrift [1]. Im Folgenden wird die Umsetzung des erfindungsgemäßen Verfahrens anhand eines Ausführungsbeispiels im Detail erläutert.

Analog zu dem Verfahren der Druckschrift [1] wird die Unsicherheitspropagation bzw. Gaußsche Fehlerfortpflanzung dazu verwendet, um die Unsicherheiten der Messungen, d.h. der Transitions-Wahrscheinlichkeiten und der Bewertungen, in die Q-Funktion und damit in die Aktionsauswahlregel zu propagieren. Aufgrund der Näherung, dass die Kovarianzmatrix nur Diagonalelemente enthält, kann die Unsicherheit von Funktionswerten f(x) mit $f : R^m \to R^n$ wie folgt als Varianz geschrieben werden:

$$(\sigma f)^2 = \sum_i \left( \frac{\partial f}{\partial x_i} \right)^2 (\sigma x_i)^2$$

Diese approximative Berücksichtigung der Unsicherheit unter Vernachlässigung von Korrelationen zwischen Variablen führt im m-ten Iterationsschritt der Bellman-Iteration, der gegeben ist durch:

$$Q^m(s, a) = \sum_{s'} P(s'|s, a) \left[ R(s, a, s') + \gamma V^{m-1}(s') \right],$$

zu folgender Unsicherheit in der Q-Funktion:

$$(\sigma Q^m(s, a))^2 = \sum_{s'} (D_{QQ})^2 (\sigma V^{m-1}(s'))^2 +$$
$$\sum_{s'} (D_{QP})^2 (\sigma P(s'|s, a))^2 +$$
$$\sum_{s'} (D_{QR})^2 (\sigma R(s, a, s'))^2,$$

$$\left(D_{QQ}\right) = \gamma P\left(s'\middle|s,a\right),$$

$$\left(D_{QP}\right) = R\left(s,a,s'\right) + \gamma V^{\,m-1}\left(s'\right),$$

$$\left(D_{QR}\right) = P\left(s'\middle|s,a\right)$$

In den obigen Gleichungen wird der allgemeine Fall einer stochastischen Aktionsauswahlregel $\pi$ angenommen, wobei $\pi(a|s)$ die Wahrscheinlichkeit der Wahl der Aktion a im Zustand s liefert. Diese Notation kann auch zur Beschreibung einer deterministischen Aktionsauswahlregel $\pi_d$ verwendet werden, wobei in einem solchen Fall $\pi(a|s):=1$ gilt, falls $\pi_d(s)=a$, und $\pi(a|s):=0$, falls $\pi_d(s)\neq a$. Zur Beurteilung bzw. Evaluierung einer gegebenen Aktionsauswahlregel lauten die obigen Größen $V^m(s)$ und $(\sigma V^m(s))^2$ für eine stochastische Aktionsauswahlregel $\pi$ wie folgt:

$$V^m\left(s\right) = \sum_a \pi\left(a\middle|s\right)Q^m\left(s,a\right),$$

$$\left(\sigma V^m\left(s\right)\right)^2 = \sum_a \pi\left(a\middle|s\right)\left(\sigma Q^m\left(s,a\right)\right)^2 \cdot$$

Demgegenüber lauten die Größen für eine deterministische Aktionsauswahlregel wie folgt:

$$V^m\left(s\right) = Q^m\left(\pi\left(s\right),a\right),$$

$$\left(\sigma V^m\left(s\right)\right)^2 = \left(\sigma Q^m\left(\pi\left(s\right),a\right)\right)^2$$

Bei der iterativen Berechnung der Aktionsauswahlregel gemäß der obigen Bellman-Optimalitäts-Gleichung lauten $V$ bzw. $\sigma V$ für die Q-Funktion $Q^*$ der optimalen Aktionsauswahlregel im m-ten Iterationsschritt der Bellman-Iteration wie folgt:

$$V^m\left(s\right) = \max Q\left(s,a\right)$$

$$\left(\sigma V^m\left(s\right)\right)^2 = \left(\sigma Q\left(s, \arg\max_a Q\left(s,a\right)\right)\right)^2$$

Erfindungsgemäß wird die oben beschriebene Unsicherheitspropagation parallel zur Bellman-Iteration verwendet, so dass in jedem Iterationsschritt $Q^m$ und $\sigma Q^m$ aktualisiert werden.

Es werden dabei entsprechende Schätzer für die Transitions-Wahrscheinlichkeit P und die Bewertung R mit deren Unsicherheiten $\sigma P$ bzw. $\sigma R$ verwendet, wie weiter unten noch näher beschrieben wird. Anfänglich wird bei der Iteration mit der Q-Funktion $Q°$ mit einer entsprechenden Unsicherheit $\sigma Q^0$ begonnen, wobei beispielsweise gelten kann $Q^0:= 0$, $\sigma Q^0 :=0$.

Wenn die oben beschriebene Iteration konvergiert, wird ein fester Wert von $Q^*$ mit entsprechender Unsicherheit $\sigma Q^*$ erreicht. Diese Information kann verwendet werden, um hierdurch folgende Q-Funktion zu erhalten, welche eine statistische Unsicherheit berücksichtigt:

$$Q_u^*(s,a) = Q^*(s,a) - \xi\sigma Q^*(s,a)$$

Diese Unsicherheits-berücksichtigende Q-Funktion liefert die erwartete Performanz mit einer garantierten Wahrscheinlichkeit von $P(\xi)$, und zwar unter der Bedingung, dass die Aktion a im Zustand s ausgeführt wird und anschließend die Aktionsauswahlregel $\pi^*(s)$=arg $\max_a Q^*(s,a)$ befolgt wird. Hierbei ist zu beachten, dass eine Aktionsauswahlregel basierend auf $Q_u^*$, d.h. $\pi_u(s) = \arg\max_a Q_u^*(s,a)$, nicht allgemein die garantierte Performanz verbessert, da $Q_u^*$ nur die Unsicherheit in einem Iterationsschritt betrachtet. Allgemein repräsentiert $Q_u^*$ nicht die Q-Funktion der Aktionsauswahlregel $\pi_u$, was zu einer Inkonsistenz führt. Um das Wissen über die Unsicherheit zum Maximieren der garantierten Performanz zu nutzen, muss die Unsicherheit in jedem Iterationsschritt der Bellman-Iteration bei der Aktualisierung der Aktionsauswahlregel berücksichtigt werden.

In der hier beschriebenen Ausführungsform der Erfindung wird deshalb die optimale Aktionsauswahlregel im m-ten Bellman-Iterationsschritt nicht basierend auf $Q^m(s,a)$ berechnet, sondern basierend auf der modifizierten Q-Funktion $Q^m(s,a)-\xi\sigma Q^m(s,a)$. Das heißt, in der hier beschriebenen Ausführungsform der Erfindung erfolgt die Berechnung der Aktionsauswahlregel basierend auf folgender Gleichung:

$$\forall s : a_{s,\max} = \arg\max_a Q^m(s,a) - \xi\sigma Q^m(s,a)$$

In darauffolgenden Schritten der Iteration wird somit $a_{s,\max}$ anstatt von arg $\max_a Q(s,a)$ verwendet, um geeignete Werte für $Q^{m-1}$ und $\sigma Q^{m-1}$ zu bestimmen.

Auf diese Weise erhält man eine Aktionsauswahlregel, welche in Bezug auf einen von dem Parameter $\xi$, abhängigen Konfidenzwert optimal ist, d.h. man erhält eine Aktionsauswahlregel, deren minimale Performanz in Abhängigkeit von einer vorgegebenen Wahrscheinlichkeit garantiert wird. Formal wird somit eine Aktionsauswahlregel $\pi$ durch Maximieren von der garantierten Performanz $Z(s,a)$ derart erhalten, dass gilt:

$$\forall s,a : P\left(\overline{Q}^\pi > Z(s,a)\right) > P(\xi)$$

Dabei bezeichnet $Q^\pi$ die wahre Q-Funktion von $\pi$ und $P(\xi)$ ist eine vorher spezifizierte und feste Wahrscheinlichkeit. Es wird somit die Performanz $Z$ durch $Q_u^\pi$ approximiert und folgende Gleichung gelöst:

$$\pi^\xi(s) = \arg\max_\pi \max_a Q_u^\pi(s,a) = \arg\max_\pi \max_a Q^\pi(s,a) - \xi\sigma Q^\pi(s,a),$$

und zwar unter der Bedingung, dass $Q^\pi$ eine gültige Q-Funktion von $\pi$ ist.

Im Falle einer deterministischen Aktionsauswahlregel erhält man auf diese Weise im Rahmen der Bellman-Iteration folgende sicherheitsoptimale Aktionsauswahlregel:

$$\pi^m(s) = \arg\max_a Q^m(s,a) - \xi\sigma Q^m(s,a)$$

Diese Aktionsauswahlregel bildet in jedem Iterationsschritt die optimale Aktion nicht in Bezug auf das Maximum der Q-Werte eines bestimmten Zustands, sondern in Bezug auf das Maximum der Q-Werte abzüglich ihrer gewichteten Unsicherheit, wobei die Gewichtung basierend auf dem Parameter $\xi$, geeignet festgelegt wird.

Es kann nicht garantiert werden, dass die soeben genannte deterministische Aktionsauswahlregel basierend auf der Bellman-Iteration konvergiert. Insbesondere gibt es zwei Effekte, welche zu einer Oszillation der Aktionsauswahlregel und somit zu einer Nicht-Konvergenz der entsprechenden Q-Funktion führen. Der erste Effekt wurde bereits in dem Dokument [1] beschrieben und basiert auf einem Bias auf $\xi\sigma Q(s,\pi(s))$, der größer als $\xi\sigma Q(s,a)$, $a \neq \pi(s)$ ist, falls $\pi$ die untersuchte Aktionsauswahlregel ist und $\xi > 0$ gilt. Dies liegt daran, dass $R(s,\pi(s),s')$ und $V(s')=Q(s'\pi(s))$ stärker korreliert sind als $R(s,a,s')$, $a \neq \pi(s)$ und $V(s')$, da die Value-Funktion die Wahl der Aktion $\pi(s)$ für jedes spätere Auftreten des Zustands s impliziert. Das Umschalten der Aktionsauswahlregel in einem bestimmten Zustand s von $\pi$ nach $\pi'$ wegen der Bedingung $Q(s,\pi(s))-\xi\sigma Q(s,\pi(s)) < Q(s,\pi'(s))-\xi\sigma Q(s,\pi'(s))$ kann zu einer größeren Unsicherheit von $Q(s,\pi'(s))$ führen und deshalb im nächsten Iterationsschritt wieder zurückspringen.

Wie bereits erwähnt, gibt es noch einen zweiten Effekt, der eine Oszillation hervorrufen kann, wenn es eine bestimmte Konstellation von Q-Werten und entsprechenden Unsicherheiten von auftretenden Aktionen gibt. Ein Beispiel einer solchen Konstellation sind die beiden Aktionen $a_1$ und $a_2$ in einem Zustand s mit ähnlichen Q-Werten, jedoch unterschiedlichen Unsicherheiten, wobei $a_1$ eine größere Unsicherheit aufweist, jedoch die bessere Aktion für den realen Markov-Entscheidungsprozess ist. Im Schritt der Aktualisierung der die Unsicherheit berücksichtigenden Aktionsauswahlregel könnte nunmehr $\pi^m$ dazu führen, dass die Aktion $a_2$ ausgewählt wird, welche die Aktion mit der kleineren Unsicherheit ist. Unter Umständen kann jedoch die Tatsache, dass diese Aktion als schlechter eingestuft wird, im nächsten Iterationsschritt hervortreten, wenn die Value-Funktion für die veränderte Aktionsauswahlregel $\pi^m$ (welche die Aktion $a_2$ auswählt) aktualisiert wird. Demzufolge kann bei der Aktualisierung der Aktionsauswahlregel im nächsten Schritt die Aktionsauswahlregel so verändert werden, dass im Zustand s der Aktion $a_1$ gewählt wird, da die Q-Funktion dann widerspiegelt, dass die Aktion $a_2$ schlechter als die Aktion $a_1$ ist. Nach der nächsten Aktualisierung der Q-Funktion werden die Werte für beide Aktionen dann ähnlich sein, da nunmehr die Value-Funktion die Wahl von $a_1$ impliziert und der schlechte Effekt von $a_2$ die Funktion $Q(s,a_2)$ nur einmal beeinflusst. Es kommt somit zu einer Oszillation zwischen den Aktionen $a_1$ und $a_2$. Hierbei sei angemerkt, dass in dem Verfahren der Druckschrift [1] beide oben beschriebenen Effekte auftreten, wohingegen in dem erfindungsgemäßen Verfahren nur der zweite Effekt relevant ist. Dies liegt daran, dass keine Kovarianzen zwischen der Q-Funktion und der Belohnung berücksichtigt werden.

Um das oben beschriebene Problem der Nicht-Konvergenz zu lösen, wird in einer besonders bevorzugten Ausführungsform eine stochastische Aktionsauswahlregel mit einem geeigneten Aktualisierungsschritt basierend auf der obigen Aktion $a_{s,max}$ bestimmt. Es ist dabei intuitiv verständlich, dass für $\xi > 0$ die sicherheitsoptimale Aktionsauswahlregel stochastisch sein sollte, da versucht wird, das Risiko einer geringen zukünftigen Belohnung zu minimieren.

In der hier beschriebenen Variante der Erfindung wird eine stochastische Aktionsauswahlregel verwendet, welche mit gleich wahrscheinlichen Aktionen initialisiert wird. In jedem Iterationsschritt wird dann die Wahrscheinlichkeit der besten Aktion gemäß $Q_u^\pi$ erhöht, während die Wahrscheinlichkeit von allen anderen Aktionen erniedrigt wird, und zwar basierend auf folgender Gleichung:

$$\forall s,a : \pi^m\big(a|s\big) =$$

$$\begin{cases} \min\big(\pi^{m-1}\big(a|s\big)+1/t,1\big), \ \textit{falls} \ \ a = a_{Q_u}\big(s\big) \\[2mm] \dfrac{\max\big(1-\pi^{m-1}\big(s,a_{Q_u}\big(s\big)\big)-1/t,0\big)}{1-\pi^{m-1}\big(s,a_{Q_u}\big(s\big)\big)} \, \pi^{m-1}\big(a|s\big), \ \textit{sonst} \end{cases}$$

Dabei bezeichnet $a_{Q_u}(s)$ die beste Aktion gemäß $Q_u$, d.h. es gilt:

$$a_{Q_u}\big(s\big) = \arg\max{}_a \, Q\big(s,a\big) - \xi\sigma Q\big(s,a\big)$$

Aufgrund der harmonisch abnehmenden Veränderungsrate werden die Konvergenz und die Erreichbarkeit aller möglichen Aktionsauswahlregeln sichergestellt. Neben der Garantie der Konvergenz zeigen dabei auch die von den Erfindern durchgeführten Experimente, dass die stochastische Aktionsauswahlregel bessere Ergebnisse als eine deterministische Aktionsauswahlregel liefert.

Die Zeitkomplexität der herkömmlichen Bellman-Iteration liegt bei $O(|S|^2|A|)$. Das erfindungsgemäße Verfahren fügt den Schritt der Aktualisierung der Unsicherheit $\sigma Q$ der Q-Funktion hinzu, der eine Zeitkomplexität von ebenfalls $O(|S|^2|A|)$ aufweist. Somit hat das gesamte Verfahren eine Zeitkomplexität von $O(|S|^2|A|)$. Das Verfahren gemäß der Druckschrift [1], welches die vollständige Kovarianzmatrix berechnet, fügt eine Zeitkomplexität zwischen $O(|S||A|)^2 \log(|S||A|))$ und $O((|S||A|)^{2.376})$ bei der Aktualisierung der Kovarianzmatrix hinzu, so dass es eine höhere Zeitkomplexität als die herkömmliche Bellman-Iteration aufweist. Die Speicherplatzkomplexität der Standard-Bellman-Iteration wird durch die Transitions-Wahrscheinlichkeiten P und die geschätzten Bewertungen R bestimmt, welche jeweils einen Speicherplatz von $O(|S|^2|A|)$ benötigen. Die Q-Funktion benötigt einen Speicherplatz von $O(|S|^2|A|)$. Somit ist die gesamte Speicherplatzkomplexität der Standard-Bellman-Iteration $O(|S|^2|A|)$. Durch die Implementierung der Unsicherheit wird eine Komplexität von $O(|S|^2|A|)$ für $\sigma P$ und $\sigma R$ sowie von $O(|S||A|)$ für $\sigma Q$ hinzugefügt. Deshalb bleibt die gesamte Speicherplatzkomplexität bei $O(|S|^2|A|)$. Im Gegensatz hierzu benötigt das Verfahren gemäß der Druckschrift [1] Speicherplatz für die vollständige Kovarianzmatrix, welche aus den Teilmatrizen $Cov(Q), Cov(Q,P), Cov(Q,R), Cov(P), Cov(P,R)$ und $Cov(R)$ besteht. Dies führt zu einer Speicherplatzkomplexität von $O(|S|^5|A|^3)$. Somit wird klar ersichtlich, dass sowohl die Zeitkomplexität als auch die Speicherplatzkomplexität in dem hier beschriebenen Verfahren wesentlich geringer sind als im Verfahren der Druckschrift [1].

Wie bereits oben dargelegt, basieren die Berechnungen zur Ermittlung der sicherheitsoptimalen Aktionsauswahlregel auf den Trainingsdaten beruhenden Schätzungen für die Transitions-Wahrscheinlichkeiten P und die Bewertungen R. Es kann dabei beispielsweise eine frequentistische Abschätzung für P und R unter Verwendung der relativen Häufigkeit der auftretenden Zustände basierend auf den Trainingsdaten verwendet werden. In diesem Fall wird die Transitions-Wahrscheinlichkeit als Multinominalverteilung modelliert und basierend darauf die Unsicherheit wie folgt berechnet:

$$\left(\sigma P\left(s'|s,a\right)\right)^2 = \frac{P\left(s'|s,a\right)\left(1 - P\left(s'|s,a\right)\right)}{n_{sa} - 1}$$

Dabei entspricht $P(s'|s,a)$ der relativen Häufigkeit des Folgezustands s' gegeben den Zustand s und die Aktion a. Ferner bezeichnet $n_{sa}$ die Anzahl der beobachteten Transitionen in einen Folgezustand ausgehend von dem Zustands-Aktions-Paar (s, a). All diese Informationen stammen aus den Trainingsdaten.

In gleicher Weise können die Bewertungen unter der Annahme einer Normalverteilung modelliert werden, wobei der Mittelwert aller beobachteten Bewertungen einer Transition (s, a, s') als Erwartungswert für die Bewertung verwendet wird. Somit ergeben sich die Unsicherheiten für die Bewertungen wie folgt:

$$\left(\sigma R\left(s,a,s'\right)\right)^2 = \frac{\mathrm{var}\left(R\left(s,a,s'\right)\right)}{n_{sas'} - 1}$$

Dabei entspricht der Ausdruck im Zähler der Varianz einer basierend auf den Trainingsdaten modellierten Normalverteilung. Ferner ist $n_{sas'}$ die Anzahl der beobachteten Transitionen (s, a, s').

Obwohl die oben beschriebene Abschätzung der Transitions-Wahrscheinlichkeiten basierend auf relativen Häufigkeiten üblicherweise zu guten Ergebnissen führt, ist die entsprechende Unsicherheitsabschätzung jedoch problematisch, falls es nur wenige Beobachtungen als Trainingsdaten gibt. Falls beispielsweise eine spezielle Transition zweimal bei zwei Versuchen beobachtet wird (d.h., wenn gilt ($n_{sas'} = n_{sa} = 2$)), ergibt sich für ihre Unsicherheit $\sigma P(s'|s,a)=0$. Dies führt dazu, dass bei wenigen Beobachtungen die Unsicherheiten oftmals zu gering eingestuft werden.

Anstatt des frequentistischen Ansatzes zur Bestimmung der Transitions-Wahrscheinlichkeiten kann auch eine Bayesianische Schätzung verwendet werden. Dabei wird als A-priori-Verteilung über den Parameterraum $P(s_k|s_i,a_j)$ für einen Zustand $s_i$, eine Aktion $a_j$ und einen Folgezustand $s_k$ die Dirichlet-Verteilung mit folgender Dichte verwendet:

$$\mathrm{Pr}\left(P\left(s_1|s_i,a_j\right),...,P\left(s_{|S|}|s_i,a_j\right)\right)_{\alpha_{ij1},...,\alpha_{ij|S|}} = \frac{\Gamma\left(\alpha_{ij}\right)}{\prod_{k=1}^{|S|}\Gamma\left(\alpha_{ijk}\right)}\prod_{k=1}^{|S|} P\left(s_k|s_i,a_j\right)^{\alpha_{ijk}-1},$$

wobei $\alpha_{ij} = \sum_{k=1}^{|S|}\alpha_{ijk}$ gilt. Die Dirichlet-Verteilung ist der sog. "conjugate prior" mit folgenden A-posteriori-Parametern: $\alpha_{ijk}^d = \alpha_{ijk} + n_{s_i a_j s_k}, \alpha_{ij}^d = \sum_{k=1}^{|S|}\alpha_{ijk}^d$ . Dabei ist $n_{s_i a_j s_k}$ die Anzahl an Transitionen von $s_i$ nach $s_k$ bei

Durchführung der Aktion $a_j$ gemäß den Trainingsdaten. Indem der Erwartungswert der A-posteriori-Verteilung als Schätzer verwendet wird, d.h. indem die Wahrscheinlichkeit abgeschätzt wird zu $P\!\left(s_k\middle|s_i,a_j\right)=\alpha_{ijk}^d/\alpha_{ij}^d$ ergibt sich als Unsicherheit für P:

$$\sigma P\!\left(s_k\middle|s_i,s_j\right)=\frac{\alpha_{ijk}^d\left(\alpha_{ij}^d-\alpha_{ijk}^d\right)}{\left(\alpha_{ij}^d\right)^2\left(\alpha_{ij}^d+1\right)}$$

$\alpha_{ijk}$ stellen die Parameter der Dirichlet-Verteilung dar. Durch die Wahl von $\alpha_{ijk}$=0 erhält man die gleichen Abschätzungen und leicht geringere Unsicherheiten im Vergleich zu der oben beschriebenen frequentistischen Modellierung der Transitions-Wahrscheinlichkeiten. Andererseits führt die Wahl von $\alpha_{ijk}$=1 zu einer Verteilung, bei der alle Transitionen von einem Zustand zu allen anderen Zuständen gleich wahrscheinlich sind.

Die Wahl von $\alpha_{ijk}$=0 und von $\alpha_{ijk}$=1 repräsentieren jeweils Extreme, welche für die meisten Anwendungen nicht geeignet sind. In einer besonders bevorzugten Variante der Erfindung werden deshalb die Parameter der Dirichlet-Verteilung wie folgt festgelegt:

$$\alpha_{ijk}=\frac{m}{|S|}$$

Dabei ist m die durchschnittliche Anzahl von erwarteten Folgezuständen von allen Zustands-Aktions-Paaren und $|S|$ ist die Gesamtanzahl von Zuständen. Diese bevorzugte Wahl von $\alpha_{ijk}$ ermöglicht dabei eine Approximation einer A-priori-Wahrscheinlichkeit mit maximaler Entropie über eine Teilmenge des Zustandsraums mit einer Größe von m Zuständen. Auf diese Weise wird der größte Anteil der Wahrscheinlichkeit unter der Untermenge von m Zuständen verteilt, welche tatsächlich beobachtet wurden, und die Wahrscheinlichkeit aller anderen (nicht beobachteten) Folgezustände wird sehr klein. Im Vergleich zu der A-priori-Verteilung mit $\alpha_{ijk}$=1 werden nur wenige Beobachtungen für die tatsächlich beobachteten Folgezustände benötigt, um eine höhere Wahrscheinlichkeit für beobachtete Folgezustände als für nicht beobachtete Folgezustände zu erreichen. Gleichzeitig ist die Abschätzung der Unsicherheit weniger extrem als beim frequentistischen Ansatz, da die Tatsache, dass die gleiche Beobachtung zweimal gemacht wurde, nicht dazu führt, dass die Unsicherheit Null wird.

Ausführungsformen des erfindungsgemäßen Verfahrens wurden anhand des sog. "Wet Chicken" Benchmark-Problems getestet. Im ursprünglichen Wet-Chicken-Problem wird ein Kanufahrer betrachtet, der entlang eines eindimensionalen Flusses mit der Länge 1 und der Fließgeschwindigkeit v = 1 paddelt. An der Position x = 1 des Flusses gibt es einen Wasserfall. Ausgehend von der Position x = 0 versucht der Kanufahrer so nahe wie möglich an den Wasserfall zu gelangen, ohne diesen herunterzufallen. Falls er den Wasserfall herunterfällt, muss er wieder an der Position x = 0 beginnen. Die Belohnung bzw. Bewertung erhöht sich linear mit der Nähe zum Wasserfall und ist gegeben durch r = x. Der Kanufahrer hat die Möglichkeit zu driften, seine Position zu halten oder zurückzupaddeln. Turbulenzen des Flusses von der Größe s = 2,5 verursachen stochastische Transitionen des Zustands. Nach dem Ausführen einer Aktion des Kanufahrers in seiner aktuellen Position (auch unter Berücksichtigung des Fließens des Flusses), ist seine neue Position gegeben durch x' = x + n, wobei $n\in[-s,s]$ ein gleich verteilter Zufallswert ist. Das hier betrachtete zweidimensionale Wet-Chicken-Problem wird um eine Breite w erweitert. Demzufolge sind zwei zusätzliche Aktionen für den Kanufahrer möglich. Er kann zum einen das Kanu nach rechts und zum anderen nach links um eine Einheit bewegen. Die Position des Kanufahrers wird als (x, y) bezeichnet und die Startposition als (0, 0). Die Fließgeschwindigkeit v und die Menge der Turbulenzen s hängt von y ab und es gilt v = 3y/w und s = 3,5-v. In dem Experiment wurde ein diskretes Problem betrachtet, d.h. die Werte von x und y wurden immer auf den nächsten ganzzahligen Wert gerundet. Während die Fließgeschwindigkeit des Flusses am linken Ufer Null beträgt, ist dort die Menge an Turbulenzen maximal. Andererseits sind am rechten Ufer des Flusses keine Turbulenzen, jedoch ist die Fließgeschwindigkeit zu hoch, um zurück zu paddeln.

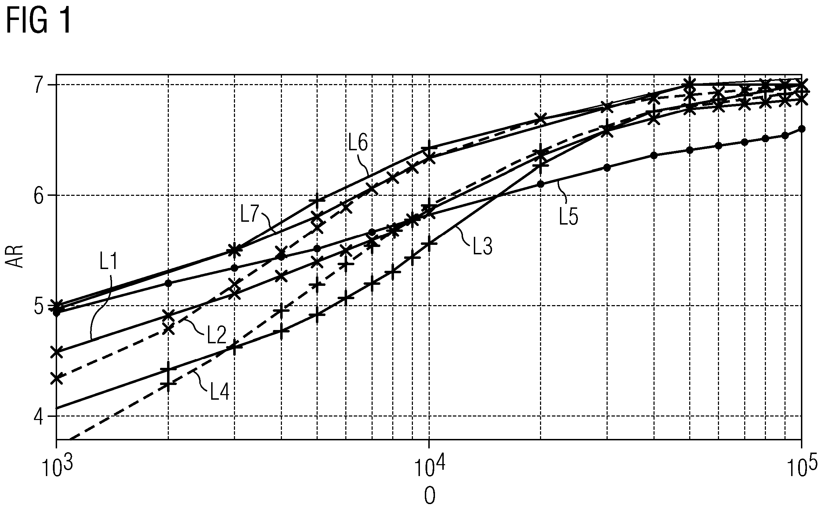

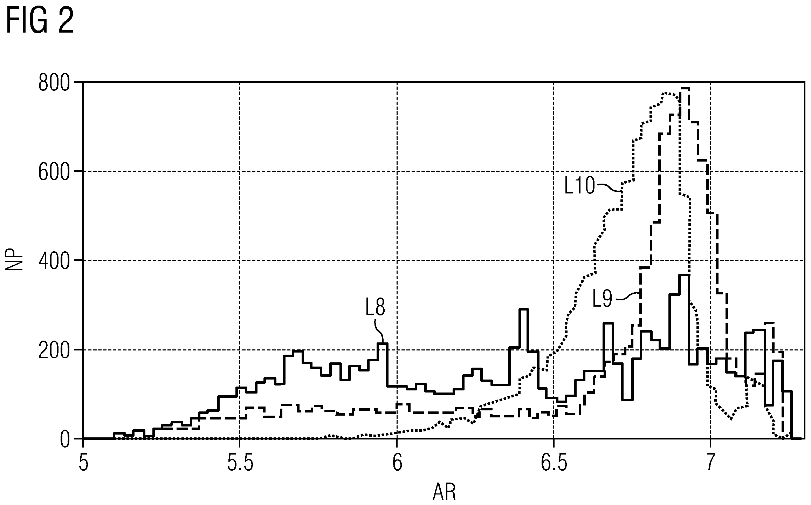

Basierend auf dem oben beschriebenen Problem wurden entsprechende Aktionsauswahlregeln mit dem erfindungsgemäßen Verfahren gelernt. Dabei wurden in den in Fig. 1 und 2 gezeigten Experimenten 100 mögliche Zustände im Fluss betrachtet, d.h. der Kanufahrer kann 10 x 10 mögliche Positionen im Fluss einnehmen. In anderen Experimenten wurden 5 x 5 bzw. 20 x 20 Zustände betrachtet. Es wurde eine feste Anzahl von Beobachtungen mittels einer zufälligen Exploration des Zustandsraums generiert. Die generierten Beobachtungen wurden als Eingangsgrößen (d.h. Trainingsdaten) für die erfindungsgemäße Bestimmung der sicherheitsoptimalen Aktionsauswahlregel verwendet. Dabei wurde

der Diskontierungsfaktor $\gamma$ auf 0,95 gesetzt. Nach der Bestimmung einer Aktionsauswahlregel wurde diese über 100 Episoden mit jeweils 1000 Schritten getestet.

Fig. 1 zeigt die Ergebnisse der getesteten Aktionsauswahlregeln, gemittelt über 100 Durchläufe. Dabei ist in Fig. 1 die durchschnittliche Belohnung der Aktionsauswahlregeln in Abhängigkeit von der Anzahl der zum Lernen der Aktionsauswahlregel verwendeten Beobachtungen wiedergegeben. Die Beobachtungen sind entlang der Abszisse aufgetragen und mit O bezeichnet, wohingegen die durchschnittliche Belohnung als AR entlang der Ordinate wiedergegeben ist. Die Linie L1 zeigt dabei das Ergebnis für den Sicherheitsparameter $\xi = 0,5$ für den frequentistischen Ansatz zur Schätzung der Transitions-Wahrscheinlichkeiten, die Linie L2 das Ergebnis für $\xi = 0,5$ für den Bayesianischen Ansatz, die Linie L3 das Ergebnis für $\xi = 1$ für den frequentistischen Ansatz und die Linie L4 das Ergebnis für $\xi = 1$ für den Bayesianischen Ansatz. Als Vergleich ist das Ergebnis des Lernens einer Aktionsauswahlregel ohne Berücksichtigung einer Unsicherheit (d.h. mit $\xi = 0$) als Linie L5 wiedergegeben. Ferner ist das Lernen einer Aktionsauswahlregel basierend auf der vollständigen Kovarianzmatrix gemäß der Druckschrift [1] gezeigt. Die Linie L6 zeigt dabei die gelernte Aktionsauswahlregel gemäß dem Verfahren der Druckschrift [1] für $\xi = 1$ und die Linie L7 die mit dem Verfahren gemäß der Druckschrift [1] gelernte Aktionsauswahlregel für $\xi = 0,5$. Aus Einfachheitsgründen wurden nur stochastische Aktionsauswahlregeln, ausgenommen für $\xi = 0$, betrachtet. Man erkennt aus Fig. 1 insbesondere, dass die Performanz des Verfahrens der Druckschrift [1] zwar höher ist, dass jedoch auch für das erfindungsgemäße Verfahren gute Ergebnisse erreicht werden, was sich in hohen durchschnittlichen Belohnungen - insbesondere bei höherer Anzahl an Beobachtungen - widerspiegelt. Ferner sind die Verfahren, welche statistische Unsicherheiten berücksichtigen, bei höherer Anzahl an Beobachtungen auch besser als das Verfahren, welches keine Unsicherheiten bei der Aktionsauswahlregel berücksichtigt.

Fig. 2 zeigt Histogramme der Häufigkeit von Aktionsauswahlregeln in Abhängigkeit von den durchschnittlichen Belohnungen für 1000 gelernte Aktionsauswahlregeln. Entlang der Abszisse sind dabei die durchschnittlichen Belohnungen AR und entlang der Ordinate die Anzahl NP von gelernten Aktionsauswahlregeln mit den entsprechenden durchschnittlichen Belohnungen wiedergegeben. Das Histogramm mit durchgezogener Linie L8 betrifft dabei eine gelernte Aktionsauswahlregel mit $\xi = 0$ (d.h. ohne Berücksichtigung von Unsicherheiten), das Histogramm mit der gestrichelten Linie L9 eine mit dem erfindungsgemäßen Verfahren gelernte Aktionsauswahlregel mit $\xi = 1$ und das Histogramm mit der gepunkteten Linie L10 eine mit dem erfindungsgemäßen Verfahren gelernte Aktionsauswahlregel mit $\xi = 2$. Für die Erzeugung jeder Aktionsauswahlregel wurden $\mathbf{4 \times 10^4}$ Beobachtungen verwendet. Man erkennt aus Fig. 2, dass mit dem erfindungsgemäßen Verfahren gelernte Aktionsauswahlregeln ein deutliches Maximum der Häufigkeiten im Bereich von einer großen durchschnittlichen Belohnung aufweisen. Dieses Maximum ist bei der Aktionsauswahlregel ohne Berücksichtigung von Unsicherheit geringer. Demgegenüber haben mit dem erfindungsgemäßen Verfahren generierte Aktionsauswahlregeln mit geringen durchschnittlichen Belohnungen eine geringere Häufigkeit im Vergleich zu entsprechenden Aktionsauswahlregeln ohne Berücksichtigung von Unsicherheit. Somit wird durch die Berücksichtigung der Unsicherheit die Menge von Aktionsauswahlregeln mit geringer Belohnung vermindert und die erwartete Performanz erhöht.

Ein wesentlicher Vorteil des erfindungsgemäßen Verfahrens gegenüber dem Verfahren der Druckschrift [1] besteht in der deutlich geringeren Rechenzeit. Für das Wet-Chicken-Problem mit 5x5 Zuständen ergab sich für das Verfahren der Druckschrift [1] eine Rechenzeit zur Erzeugung der Auswahlregel von 5,61 s, wohingegen das erfindungsgemäße Verfahren lediglich 0,0002 s brauchte. Bei dem Wet-Chicken-Problem mit 10x10 Zuständen war die Rechenzeit des Verfahrens des Dokuments [1] bei $\mathbf{1,1 \times 10^3}$ s, wohingegen das erfindungsgemäße Verfahren lediglich nur 0,034 s brauchte. Für das Wet-Chicken-Problem mit **20x20** Zuständen konnte wegen der großen daraus resultierenden Rechenzeit- und Speicherplatzerfordernissen überhaupt keine Aktionsauswahlregel mit dem Verfahren der Druckschrift [1] ermittelt werden, wohingegen das erfindungsgemäße Verfahren 1,61 s zur Generierung der Aktionsauswahlregel benötigte.

Das oben beschriebene Wet-Chicken-Experiment dient lediglich zur Verdeutlichung der besseren Performanz des erfindungsgemäßen Verfahrens gegenüber bekannten Verfahren. Erfindungsgemäß wird das Verfahren zur Steuerung bzw. Regelung von technischen Systemen eingesetzt. Zum Test des erfindungsgemäßen Verfahrens wurde auch eine Simulation zur Steuerung einer Gasturbine durchgeführt. Auch für diese Simulation zeigte das erfindungsgemäße Verfahren eine gute Performanz mit geringer Rechenzeit.

Literaturverzeichnis

[1] D. Schneegaß, S. Udluft, T. Martinetz: Uncertainty Propagation for Quality Assurance in Reinforcement Learning, 2008, Proc. of the International Joint Conference on Neural Networks (IJCNN), pages 2589-2596.

# EP 2 296 062 B1

**Patentansprüche**

1. Verfahren zum Betrieb eines technischen Systems,
umfassend ein rechnergestütztes Lernen einer sicherheitsoptimalen Aktionsauswahlregel, welche die Performance des technischen Systems unter Berücksichtigung der statistischen Unsicherheit maximiert,
wobei der Betrieb des technischen Systems charakterisiert ist durch Zustände (s), welche das technische System im Betrieb einnehmen kann, und Aktionen, welche während der Betriebs des technischen Systems ausgeführt werden und einen jeweiligen Zustand (s) des technischen Systems in einen Folgezustand überführen, bei dem:

   - im Betrieb des technischen Systems Variablen mit Trainingsdaten, welche Zustände (s), Aktionen (a) und Folgezustände (s') erfassen, jeweils mit statistischer Unsicherheit erfasst werden, wobei für die statistischen Unsicherheiten der erfassten Variablen eine Kovarianzmatrix erstellt wird, in der die Korrelationen zwischen Unsicherheiten der in das Lernverfahren einfließenden Variablen der Trainingsdaten erfasst werden;
   - basierend auf den im Betrieb des technischen Systems erfassten Trainingsdaten eine Qualitätsfunktion (Q) gelernt wird, wobei die Qualitätsfunktion (Q) einen Optimalbetrieb des technischen Systems modelliert;
   - während des Lernens der Qualitätsfunktion (Q) ein Maß ($\sigma$Q) für die Unsicherheit der Qualitätsfunktion (Q) mittels einer Unsicherheitspropagation mittels der Kovarianzmatrix ermittelt wird, die Unsicherheiten in den erfassten Trainingsdaten in die Qualitätsfunktion (Q) propagiert,
   wobei die Unsicherheitspropagation die Kovarianzmatrix verwendet, in der die Nicht-Diagonalelemente vernachlässigt sind, wodurch Korrelationen zwischen den bei der Unsicherheitspropagation berücksichtigten Variablen vernachlässigt werden,
   und in Abhängigkeit von dem Maß ($\sigma$Q) für die statistische Unsicherheit und einem Sicherheitsparameter ($\xi$), der einer statistischen Mindestanforderung an die Qualitätsfunktion (Q) entspricht, eine modifizierte Qualitätsfunktion bestimmt wird,
   - wobei eine Aktionsauswahlregel (n(s)) basierend auf der modifizierten Qualitätsfunktion gelernt wird, die im Betrieb des technischen Systems für einen jeweiligen Zustand (s) des technischen Systems die auszuführende Aktion (a) oder auszuführenden Aktionen (a) angibt,

   wobei das technische System basierend auf der gelernten Steuerung und/oder Regelung betrieben wird, indem mit der gelernten Aktionsauswahlregel in einem jeweiligen Zustand (s) des technischen Systems die auszuführende Aktion (a) ausgewählt wird.

2. Verfahren nach Anspruch 1, bei dem die Qualitätsfunktion (Q) unter Berücksichtigung von Bewertungen (R) und Zustands-Aktions-Wahrscheinlichkeiten (P) gelernt wird, wobei eine jeweilige Bewertung (R) die Qualität einer Kombination aus Zustand (s), in dem Zustand ausgeführter Aktion (a) und Folgezustand (s') im Hinblick auf den Optimalbetrieb des technischen Systems bewertet und eine jeweilige Zustands-Aktions-Wahrscheinlichkeit (P) in Abhängigkeit von einem Zustand und der in dem Zustand ausgeführten Aktion (a) die Wahrscheinlichkeit (P) eines Folgezustands (s') angibt.

3. Verfahren nach Anspruch 2, bei dem die Qualitätsfunktion (Q) und die Aktionsauswahlregel (n(s)) basierend auf der Bellman-Iteration gelernt werden, wobei in jedem Iterationsschritt eine neue Qualitätsfunktion (Q) und ein neues Maß für die statistische Unsicherheit der Qualitätsfunktion (Q) und hierdurch eine neue modifizierte Qualitätsfunktion bestimmt wird, wobei in einem jeweiligen Iterationsschritt die Kovarianzmatrix in Abhängigkeit von der Qualitätsfunktion (Q), den Zustands-Aktions-Wahrscheinlichkeiten (P) und den Bewertungen (R) unter Vernachlässigung der Nicht-Diagonalelemente ermittelt wird.

4. Verfahren nach Anspruch 3, bei dem im m-ten Iterationsschritt der Bellman-Iteration die Aktionsauswahlregel basierend auf folgender Aktion as,max bestimmt wird:

$$\forall s : a_{s,\max} = \arg\max_{a}[Q^m(s,a) - \xi\sigma Q^m(s,a)]$$

wobei

$$Q^m(s,a) = \sum_{s'} P(s'|s,a)[R(s,a,s') + \gamma V^{m-1}(s')]$$

die Qualitätsfunktion und $Q^m(s,a)-\xi\sigma Q^m(s,a)$ die modifizierte Qualitätsfunktion ist;

14

$\sigma Q^{m}(s,a)$ das Maß ($\sigma$Q) für die statistische Unsicherheit der Qualitätsfunktion (Q) im m-ten Iterationsschritt ist, wobei

$$\left(\sigma Q^{m}(s,a)\right)^{2} = \sum_{s'} \left(D_{QQ}\right)^{2}\left(\sigma V^{m-1}(s')\right)^{2} +$$
$$\sum_{s'} \left(D_{QP}\right)^{2}\left(\sigma P(s'|s,a)\right)^{2} +$$
$$\sum_{s'} \left(D_{QR}\right)^{2}\left(\sigma R(s,a,s')\right)^{2},$$

$$\left(D_{QQ}\right) = \gamma P(s'|s,a),$$

$$\left(D_{QP}\right) = R(s,a,s') + \gamma V^{m-1}(s'),$$

$$\left(D_{QR}\right) = P(s'|s,a)$$

$\gamma \in [0,1]$ ein Diskontierungsfaktor ist;
$\xi$ der Sicherheitsparameter ist;

$$V^{m}(s) = \max_{a}[Q^{m}(s,a) - \xi\sigma Q^{m}(s,a)] ;$$

$$(\sigma V^{m}(s))^{2} = (\sigma Q(s,a_{s,\max}))^{2} \quad \texttt{gilt;}$$

P(s'|s,a) die Zustands-Aktions-Wahrscheinlichkeit für den Folgezustand s' bei Ausführung der Aktion a im Zustand s ist;
R(s,a,s') die Bewertung des Folgezustands s' bei Ausführung der Aktion a im Zustand s ist;
$\sigma$P(s'|s,a) die statistische Unsicherheit der Zustands-Aktions-Wahrscheinlichkeiten ist;
$\sigma$R(s,a,s') die statistische Unsicherheit der Bewertungen ist.

5. Verfahren nach einem der Ansprüche 2 bis 4, bei dem die Zustands-Aktions-Wahrscheinlichkeiten (P) als eine Zustands-Aktions-Wahrscheinlichkeitsverteilung modelliert werden und/oder die Bewertungen (R) als eine Bewertungs-Wahrscheinlichkeitsverteilung modelliert werden.

6. Verfahren nach Anspruch 4 und 5, bei dem die statistische Unsicherheit ($\sigma$P) der Zustands-Aktions-Wahrscheinlichkeiten (P) aus der modellierten Zustands-Aktions-Wahrscheinlichkeitsverteilung und die statistische Unsicherheit ($\sigma$R) der Bewertungen aus der modellierten Bewertungs-Wahrscheinlichkeitsverteilung ermittelt werden.

7. Verfahren nach Anspruch 5 oder 6, bei dem die Zustands-Aktions-Wahrscheinlichkeitsverteilung und/oder die Bewertungs-Wahrscheinlichkeitsverteilung als relative Häufigkeiten aus den Trainingsdaten modelliert werden, wobei die Zustands-Aktions-Wahrscheinlichkeitsverteilung insbesondere als Multinomial-Verteilung modelliert wird und/oder die Bewertungs-Wahrscheinlichkeitsverteilung insbesondere als Normalverteilung modelliert wird.

8. Verfahren nach einem der Ansprüche 5 bis 7, bei dem die Zustands-Aktions-Wahrscheinlichkeitsverteilung basierend auf einer Bayesianischen Schätzung mit einer A-priori-Verteilung und A-posteriori-Parametern modelliert wird, wobei die A-posteriori-Parameter von den Trainingsdaten abhängen.

9. Verfahren nach Anspruch 8, wobei die A-priori-Verteilung eine Dirichlet-Verteilung und/oder eine Normalverteilung ist.

10. Verfahren nach Anspruch 9, bei dem die Parameter ($\alpha_{ijk}$) der Dirichlet-Verteilung jeweils dem Quotienten aus der durchschnittlichen Anzahl an Folgezuständen (s') und der Gesamtanzahl an Zuständen (s) gemäß den Trainingsdaten entsprechen.

11. Verfahren nach einem der vorhergehenden Ansprüche, bei dem die zu lernende Aktionsauswahlregel eine deterministische Aktionsauswahlregel ist.

12. Verfahren nach Anspruch 11, wenn abhängig von Anspruch 4, bei dem die Aktionsauswahlregel $\pi^m(s)$ im m-ten Iterationsschritt der Bellman-Iteration wie folgt lautet:

$$\pi^m(s) = \arg\max_a Q^m(s,a) - \xi\sigma Q^m(s,a)$$,

wobei $\pi^m(s)$ die ausgewählte Aktion ist.

13. Verfahren nach einem der Ansprüche 1 bis 10, bei dem die zu lernende Aktionsauswahlregel eine stochastische Aktionsauswahlregel (n(s)) ist, welche für einen Zustand (s) des technischen Systems eine Wahrscheinlichkeitsverteilung für die ausführbaren Aktionen (a) angibt.

14. Verfahren nach Anspruch 13, wenn abhängig von Anspruch 3, bei dem in jedem Iterationsschritt der Bellman-Iteration als neue Wahrscheinlichkeitsverteilung für die ausführbaren Aktionen (a) eine Wahrscheinlichkeitsverteilung ermittelt wird, welche die Wahrscheinlichkeitsverteilung des letzten Iterationsschritts derart modifiziert, dass der Aktion (a), welche den Wert der modifizierten Qualitätsfunktion maximiert, eine höhere Wahrscheinlichkeit zugewiesen wird.

15. Verfahren nach einem der vorhergehenden Ansprüche, bei dem mit dem Verfahren eine Steuerung und/oder Regelung einer Turbine, insbesondere einer Gasturbine, gelernt wird.

16. Verfahren nach einem der Ansprüche 1 bis 14, bei dem mit dem Verfahren die Steuerung und/oder Regelung einer Windkraftanlage gelernt wird.

17. Computerprogrammprodukt mit einem auf einem maschinenlesbaren Träger gespeicherten Programmcode zur Durchführung eines Verfahrens nach einem der vorhergehenden Ansprüche, wenn das Programm auf einem Rechner abläuft.

**Claims**

1. Method for operating a technical system, comprising computer-supported learning of an optimum-certainty action selection rule that maximizes the performance of the technical system by taking into account the statistical uncertainty, wherein the operation of the technical system is **characterized by** states (s) that the technical system can adopt during operation and actions that are performed during the operation of the technical system and transfer a respective state (s) of the technical system to a subsequent state, in which:

> - variables containing training data that record states (s), actions (a) and subsequent states (s') are each captured with statistical uncertainty during operation of the technical system,
> wherein a covariance matrix that covers the correlations between uncertainties of the training data's variables included in the learning process is produced for the statistical uncertainties of the captured variables;
> - a quality function (Q) is learned on the basis of the training data captured during operation of the technical system, wherein the quality function (Q) models optimum operation of the technical system;
> - a measure ($\sigma Q$) of the uncertainty of the quality function (Q) is ascertained during the learning of the quality function (Q) by means of an uncertainty propagation by means of the covariance matrix, which propagates uncertainties in the captured training data into the quality function (Q),
> wherein the uncertainty propagation uses the covariance matrix, in which the non-diagonal elements are ignored, as a result of which correlations between the variables taken into account for the uncertainty propagation are ignored,

and the measure ($\sigma Q$) of the statistical uncertainty and a certainty parameter ($\xi$), which corresponds to a statistical minimum demand on the quality function (Q), are taken as a basis for determining a modified quality function,

- wherein an action selection rule ($\pi(s)$) is learned on the basis of the modified quality function, which indicates the action (a) to be performed or actions (a) to be performed for a respective state (s) of the technical system during operation of the technical system,

wherein the technical system is operated on the basis of the learned control and/or regulation by virtue of the action (a) to be performed being selected using the learned action selection rule in a respective state (s) of the technical system.

2. Method according to Claim 1, in which the quality function (Q) is learned by taking into account ratings (R) and state-action probabilities (P), wherein a respective rating (R) rates the quality of a combination of state (s), action (a) performed in the state and subsequent state (s') in regard to the optimum operation of the technical system, and a respective state-action probability (P) takes a state and the action (a) performed in the state as a basis for indicating the probability (P) of a subsequent state (s').

3. Method according to Claim 2, in which the quality function (Q) and the action selection rule ($\pi(s)$) are learned on the basis of the Bellman iteration, wherein a new quality function (Q) and a new measure of the statistical uncertainty of the quality function (Q) and, as a result, a new modified quality function are determined in each iteration step, the covariance matrix being ascertained in a respective iteration step on the basis of the quality function (Q), the state-action probabilities (P) and the ratings (R) while ignoring the non-diagonal elements.

4. Method according to Claim 3, in which the action selection rule is determined in the m-th iteration step of the Bellman iteration on the basis of the following action $a_{s,max}$:

$$\forall s \; : \; a_{s,max} \; = \; \arg \max_{a}[Q^m(s,a) - \xi \sigma Q^m(s,a)]$$

where

$Q^m(s,a) = \sum P(s'|s,a)[R(s,a,s') + \gamma V^{m-1}(s')]$ is the quality function and $Q^m(s,a) - \xi \sigma Q^m(s,a)$ is the modified quality function;

$\sigma Q^m(s,a)$ is the measure ($\sigma Q$) of the statistical uncertainty of the quality function (Q) in the m-th iteration step, where

$$\left(\sigma Q^m(s,a)\right)^2 = \sum_{s'} \left(D_{QQ}\right)^2 \left(\sigma V^{m-1}(s')\right)^2 +$$

$$\sum_{s'} \left(D_{QP}\right)^2 \left(\sigma P(s'|s,a)\right)^2 +$$

$$\sum_{s'} \left(D_{QR}\right)^2 \left(\sigma R(s,a,s')\right)^2,$$

$$\left(D_{QQ}\right) = \gamma P(s'|s,a),$$

$$\left(D_{QP}\right) = R(s,a,s') + \gamma V^{m-1}(s'),$$

$$\left(D_{QR}\right) = P(s'|s,a)$$

$\gamma \in [0,1]$ is a discount factor;
$\xi$ is the certainty parameter;

$$V^{m}(s) = \max_{a}[Q^{m}(s,a) - \xi\sigma Q^{m}(s,a)] \quad ;$$

$$(\sigma V^{m}(s))^{2} = (\sigma Q(s,a_{s,\max}))^{2} \quad ;$$

P(s'|s,a) is the state-action probability of the subsequent state s' when the action a is performed in the state s;
R(s,a,s') is the rating of the subsequent state s' when the action a is performed in the state s;
$\sigma$P(s'|s,a) is the statistical uncertainty of the state-action probabilities;
$\sigma$R(s,a,s') is the statistical uncertainty of the ratings.

5. Method according to one of Claims 2 to 4, in which the state-action probabilities (P) are modelled as a state-action probability distribution, and/or the ratings (R) are modelled as a rating probability distribution.

6. Method according to Claims 4 and 5, in which the statistical uncertainty ($\sigma$P) of the state-action probabilities (P) is ascertained from the modelled state-action probability distribution, and the statistical uncertainty (oR) of the ratings is ascertained from the modelled rating probability distribution.

7. Method according to Claim 5 or 6, in which the state-action probability distribution and/or the rating probability distribution are modelled as relative frequencies from the training data, wherein the state-action probability distribution is modelled in particular as multinomial distribution and/or the rating probability distribution is modelled in particular as normal distribution.

8. Method according to one of Claims 5 to 7, in which the state-action probability distribution is modelled on the basis of a Bayesian estimation with an a-priori distribution and a-posteriori parameters, the a-posteriori parameters being dependent on the training data.

9. Method according to Claim 8, wherein the a-priori distribution is a Dirichlet distribution and/or a normal distribution.

10. Method according to Claim 9, in which the parameters ($\alpha_{ijk}$) of the Dirichlet distribution correspond in each case to the quotient of the average number of subsequent states (s') and the total number of states (s) according to the training data.

11. Method according to one of the preceding claims, in which the action selection rule to be learned is a deterministic action selection rule.

12. Method according to Claim 1, when dependent on Claim 4, in which the action selection rule $\pi^{m}(s)$ in the m-th iteration step of the Bellman iteration reads as follows:

$$\pi^{m}(s) = \arg\max_{a} Q^{m}(s,a) - \xi\sigma Q^{m}(s,a) \quad ,$$

where $\pi^{m}(s)$ is the selected action.

13. Method according to one of Claims 1 to 10, in which the action selection rule to be learned is a stochastic action selection rule ($\pi$(s)) that indicates a probability distribution for the performable actions (a) for a state (s) of the technical system.

14. Method according to Claim 13, when dependent on Claim 3, in which, in each iteration step of the Bellman iteration, as new probability distribution for the performable actions (a), a probability distribution is ascertained that modifies the probability distribution of the last iteration step such that the action (a), which maximizes the value of the modified quality function, is assigned a higher probability.

**15.** Method according to one of the preceding claims, in which the method is used to learn control and/or regulation of a turbine, in particular a gas turbine.

**16.** Method according to one of Claims 1 to 14, in which the method is used to learn the control and/or regulation of a wind power installation.

**17.** Computer program product having a program code, stored on a machine-readable medium, for performing a method according to one of the preceding claims when the program runs on a computer.

**Revendications**

**1.** Procédé pour faire fonctionner un système technique, comprenant un apprentissage assisté par ordinateur d'une règle de sélection d'action, la meilleure du point de vue de la sécurité, qui rend maximum les performances du système technique en tenant compte de l'insécurité statistique,
dans lequel le fonctionnement du système technique est **caractérisé par** des états (s), que le système technique peut prendre en fonctionnement et par des actions qui sont effectuées pendant le fonctionnement du système technique et font passer un état (s) respectif du système technique à un état suivant, dans lequel :

- lorsque le système technique est en fonctionnement, on détecte respectivement avec de l'insécurité statistique des variables par des données d'apprentissage, qui détectent des états (s),
des actions (a) et des états (s') suivants,
dans lequel on établit pour les insécurités statistiques des variables détectées une matrice de covariance, dans laquelle on détecte les corrélations entre des insécurités des variables entrant dans le procédé d'apprentissage des données d'apprentissage;
- sur la base des données d'apprentissage détectées alors que le système technique est en fonctionnement, on fait l'apprentissage d'une fonction (Q) de qualité, la fonction (Q) de qualité modélisant un fonctionnement le meilleur du système technique;
- pendant l'apprentissage de la fonction (Q) de qualité, on détermine au moyen de la matrice de covariance une mesure ($\sigma Q$) de l'insécurité de la fonction (Q) de qualité au moyen d'une propagation d'insécurité, les insécurités dans les données d'apprentissage détectées se propageant dans la fonction (Q) de qualité,
dans lequel la propagation d'insécurité utilise la matrice de covariance, dans laquelle les éléments non diagonaux sont négligés, grâce à quoi des corrélations entre les variables prises en compte dans la propagation d'insécurité sont négligées,
et en fonction de la mesure ($\sigma Q$) de l'insécurité statistique et d'un paramètre ($\xi$) de sécurité, qui correspond à une exigence statistique minimum sur la fonction (Q) de qualité, on détermine une fonction de qualité modifiée,
- dans lequel on fait l'apprentissage d'une règle (n (s)) de sélection d'action reposant sur la fonction de qualité modifiée qui indique, lorsque le système technique est en fonctionnement pour un état (s) respectif du système technique, l'action (a) à exécuter ou des actions (a) à exécuter,

dans lequel on fait fonctionner le système technique sur la base de la commande et/ou de la régulation ayant subi un apprentissage, en choisissant l'action (a) à exécuter dans un état (s) respectif du système technique par la règle de sélection d'action apprise.

**2.** Procédé suivant la revendication 1, dans lequel on fait l'apprentissage de la fonction (Q) de qualité en tenant compte d'évaluations et de probabilités (P) d'état-action, une évaluation (R) respective évaluant au vu du fonctionnement le meilleur du système technique, une combinaison d'un état (s), d'une action (a) exécutée dans l'état et d'un état (s') suivant et une probabilité (P) d'état-action en fonction d'un état et de l'action (a) exécutée dans l'état indiquant la probabilité (P) d'un état (s') suivant.

**3.** Procédé suivant la revendication 2, dans lequel on fait l'apprentissage de la fonction (Q) de qualité et de la règle (n (s)) de sélection d'action sur la base de l'itération de Bellman, dans lequel dans chaque stade d'itération, on détermine une fonction (Q) de qualité nouvelle et une mesure nouvelle de l'insécurité statistique de la fonction (Q) de qualité et ainsi une nouvelle fonction de qualité modifiée, dans lequel dans un stade d'itération respectif, on détermine, en négligeant les éléments non diagonaux, la matrice de covariance en fonction de la fonction (Q) de qualité, des probabilités (P) d'état-action et des évaluations (R).

**4.** Procédé suivant la revendication 3, dans lequel au m ième stade d'itération de l'itération de Bellman, on détermine la règle de sélection d'action sur la base de l'action suivante as,max :

$$\forall s : a_{s,max} = arg \max_{a} [Q^m(s,a) - \xi\sigma Q^m(s,a)]$$

dans laquelle

$Q^m(s,a) = \sum P(s'|s,a)[R(s,a,s') + \gamma V^{m-1}(s')]$ est la fonction de qualité et
$Q^m(s,a) - \xi\sigma Q^m(s,a)$ est la fonction de qualité modifiée;
$\sigma Q^m(s,a)$ est la mesure $(\sigma Q)$ de l'insécurité statistique de la fonction (Q) de qualité au m ième stade d'itération, dans lequel

$$(\sigma Q^m(s,a))^2 = \sum_{s'} (D_{QQ})^2 (\sigma V^{m-1}(s'))^2 +$$

$$\sum_{s'} (D_{QP})^2 (\sigma P(s'|s,a))^2 +$$

$$\sum_{s'} (D_{QR})^2 (\sigma R(s,a,s'))^2 ,$$

$$(D_{QQ}) = \gamma P(s'|s,a) ,$$

$$(D_{QP}) = R(s,a,s') + \gamma V^{m-1}(s') ,$$

$$(D_{QR}) = P(s'|s,a)$$

$\gamma \in [0,1]$ est un facteur de discontinuité ;
$\xi$ est le paramètre de sécurité ;

$$V^m(s) = \max_{a} [Q^m(s,a) - \xi\sigma Q^m(s,a)] ;$$

$$(\sigma V^m(s))^2 = (\sigma Q(s,a_{s,max}))^2 ;$$

$P(s'|s,a)$ est la probabilité d'état-action pour l'état s' suivant lors de l'exécution de l'action a dans l'état s;
$R(s,a,s')$ est l'évaluation de l'état s' suivant lors de l'exécution de l'action a dans l'état s;
$\sigma P(s'|s,a)$ est l'insécurité statistique des probabilités d'état-action;
oR (s,a,s') est l'insécurité statistique des évaluations.

5. Procédé suivant l'une des revendications 2 à 4, dans lequel on modélise les probabilités (P) d'état-action sous la forme d'une réparation de probabilité d'état-action et/ou on modélise les évaluations (R) sous la forme d'une répartition de probabilité d'évaluation.

6. Procédé suivant la revendication 4 et 5, dans lequel on détermine l'insécurité $(\sigma P)$ statistique des probabilités (P) d'état-action à partir de la répartition de probabilité d'état-action modélisée et l'insécurité (oR) statistique des évaluations à partir de la répartition de probabilité d'évaluation modélisée.

7. Procédé suivant la revendication 5 ou 6, dans lequel on modélise la répartition de probabilité d'état-action et/ou la répartition de probabilité d'évaluation sous la forme de fréquence relative à partir des données d'apprentissage, la répartition de probabilité d'état-action étant modélisée, notamment sous la forme d'une répartition multinomiale et/ou la répartition de probabilité d'évaluation étant modélisée, notamment sous la forme d'une répartition normale.

8. Procédé suivant l'une des revendications 5 à 7, dans lequel on modélise par une répartition à priori et des paramètres à posteriori la répartition de probabilité d'état-action sur la base d'une estimation de Bayes, les paramètres à posteriori dépendant des données d'apprentissage.

9. Procédé suivant la revendication 8, dans lequel la répartition à priori est une répartition de Dirichlet et/ou une répartition normale.

10. Procédé suivant la revendication 9, dans lequel les paramètres ($\alpha_{ijf}$) de la répartition de Dirichlet correspondent chacun au quotient du nombre moyen d'états (s') suivants par le nombre total d'états (s) selon les données d'apprentissage.

11. Procédé suivant l'une des revendications précédentes, dans lequel la règle de sélection d'action à apprendre est une règle de sélection d'action déterministe.

12. Procédé suivant la revendication 11, lorsqu'elle dépend de la revendication 4, dans lequel la règle $\pi^m(s)$ de sélection d'action au m ième stade d'itération de l'itération de Bellman s'énonce de la manière suivante :

$$\pi^m(s) = \arg\max_a Q^m(s,a) - \xi\sigma Q^m(s,a) \quad,$$

dans laquelle $\pi^m(s)$ est l'action sélectionnée.

13. Procédé suivant l'une des revendications 1 à 10, dans lequel la règle de sélection d'action à apprendre est une règle ($\pi(s)$) de sélection d'action stochastique, qui indique pour un état (s) du système technique une répartition de probabilité des actions (a) pouvant être exécutées.

14. Procédé suivant la revendication 13, lorsqu'elle dépend de la revendication 3, dans lequel dans chaque stade d'itération de l'itération de Bellman, on détermine, comme nouvelle répartition de probabilité des actions (a) pouvant être exécutées, une répartition de probabilité, qui modifie la répartition de probabilité du dernier stade d'itération de manière à affecter une probabilité plus grande à l'action (a), qui rend maximum la valeur de la fonction de qualité modifiée.

15. Procédé suivant l'une des revendications précédentes, dans lequel on fait l'apprentissage par le procédé d'une commande et/ou d'une régulation d'une turbine, notamment d'une turbine à gaz.

16. Procédé suivant l'une des revendications 1 à 14, dans lequel on fait l'apprentissage par le procédé de la commande et/ou de la régulation d'une éolienne.

17. Produit de programme d'ordinateur comprenant un code de programme mis en mémoire sur un support déchiffrable par ordinateur, pour effectuer un procédé suivant l'une des revendications précédentes, lorsque le programme se déroule sur un ordinateur.

FIG 1

EP 2 296 062 B1

FIG 2

EP 2 296 062 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008080864 A1

**In der Beschreibung aufgeführte Nicht-Patentliteratur**

- Multi-model based realtime final product quality control strategy for batch processes. **WANG D et al.** COMPUTER & CHEMICAL ENGINEERING. PERGAMON PRESS, 21. Mai 2009, vol. 33, 992-1003

- **D. SCHNEEGAß ; S. UDLUFT ; T. MARTINETZ.** Uncertainty Propagation for Quality Assurance in Reinforcement Learning, 2008. *Proc. of the International Joint Conference on Neural Networks (IJCNN),* 2589-2596